# EUROPEAN PATENT APPLICATION

(11) **EP 4 800 269 A1**
(43) Date of publication of application: **02.09.2026**
(21) Application number: 24916308.0
(22) Date of filing: 28.06.2024
(51) Int. Cl.: F16H 61/12

(54) **GEAR DISENGAGEMENT HANDLING MECHANISM ACTIVATION METHOD, APPARATUS AND SYSTEM, VEHICLE, AND STORAGE MEDIUM**

(30) Priority: 08.01.2024 CN 202410026511
(71) Applicant: Dongfeng Motor Group Co., Ltd., Wuhan, Hubei 430056 (CN)
(72) Inventor: ZHANG, Li, Wuhan, Hubei 430056 (CN); WU, Zhaosu, Wuhan, Hubei 430056 (CN); LI, Shicheng, Wuhan, Hubei 430056 (CN); ZHU, Qiang, Wuhan, Hubei 430056 (CN); WANG, Wei, Wuhan, Hubei 430056 (CN)
(74) Representative: Gille Hrabal Partnerschaftsgesellschaft mbB Patentanwälte
(86) International application number: PCT/CN2024/102482
(87) International publication number: WO 2025/148252

(57) **Abstract**

The present application discloses a gear disengagement handling mechanism activation method, apparatus and system, a vehicle, and a storage medium. The gear disengagement handling mechanism activation method is applied to a hybrid transmission control unit (HTCU). The method comprises: when a vehicle completes gear shifting, determining whether the vehicle satisfies a diagnosis condition; if the vehicle satisfies the diagnosis condition, determining a rotating speed difference between two ends of a synchronizer on the basis of a current gear of the vehicle, the current gear being one of gears under different driving modes; when the rotating speed difference is greater than or equal to a first threshold, determining that the vehicle is in a gear disengagement state, and determining a first accumulated duration of the gear disengagement state; and when the first accumulated duration is greater than or equal to a second threshold, sending a handling request to a vehicle electronic control unit (VECU), the handling request being used for requesting the VECU to activate a corresponding handling mechanism for the current gear.

## Description

### Field of the Invention

The present application relates to the field of vehicle control, and in particular to a gear disengagement handling mechanism activation method, apparatus and system, a vehicle, and a storage medium.

### Background of the Invention

When gear disengagement occurs during vehicle driving, a fault needs to be diagnosed in time and a safe mode needs to be entered promptly; otherwise, damage to a transmission may be caused, or unexpected deceleration of the vehicle may occur, thereby causing a safety accident. However, existing methods for determining gear disengagement during vehicle driving mainly directly determine gear disengagement under a parallel mode, lack enabling conditions for determining a gear disengagement state, and are directed to a gear disengagement determination method for a single parallel mode, and therefore are not applicable to a complex hybrid transmission. As such, gear disengagement determination is unreliable, and missed alarms or false alarms are likely to occur, thereby further reducing driving safety.

### Summary of the Invention

In view of this, the embodiments of the present application provide a gear disengagement handling mechanism activation method, apparatus and system, a vehicle, and a storage medium.

The technical solutions in the embodiments of the present application are implemented as follows.

In a first aspect, the embodiments of the present application provide a gear disengagement handling mechanism activation method, which is applied to a hybrid transmission control unit (HTCU), and comprises: when a vehicle completes gear shifting, determining whether the vehicle satisfies a diagnostic condition; when the vehicle satisfies the diagnosis condition, determining a rotating speed difference between two ends of a synchronizer based on a current gear of the vehicle, wherein the current gear comprises one of gears under different driving modes; when the rotating speed difference is greater than or equal to a first threshold, determining that the vehicle is in a gear disengagement state, and determining a first accumulated duration of the gear disengagement state; and when the first accumulated duration is greater than or equal to a second threshold, sending a handling request to a vehicle electronic control unit (VECU), wherein the handling request is configured to request the VECU to activate a corresponding handling mechanism for the current gear.

In a second aspect, the embodiments of the present application provide a gear disengagement handling mechanism activation method, which is applied to a vehicle electronic control unit (VECU), and comprises: receiving a handling request sent by a hybrid transmission control unit (HTCU), wherein the handling request is sent by the HTCU when a first accumulated duration is greater than or equal to a second threshold, the first accumulated duration is determined by the HTCU when a rotating speed difference is greater than or equal to a first threshold, and the rotating speed difference is the rotating speed difference between two ends of a synchronizer determined by the HTCU based on a current gear of a vehicle; determining the current gear of the vehicle, wherein the current gear comprises one of gears under different driving modes; and activating a handling mechanism corresponding to the current gear.

In a third aspect, the embodiments of the present application provide a gear disengagement handling mechanism activation apparatus, which comprises: a diagnostic module, which is configured to, when a vehicle completes gear shifting, determine whether the vehicle satisfies a diagnostic condition; a first determining module, which is configured to, when the vehicle satisfies the diagnosis condition, determine a rotating speed difference between two ends of a synchronizer based on a current gear of the vehicle, wherein the current gear comprises one of gears under different driving modes; and a second determining module, which is configured to, when the rotating speed difference is greater than or equal to a first threshold, determine that the vehicle is in a gear disengagement state, and determine a first accumulated duration of the gear disengagement state; and a first sending module, which is configured to, when the first accumulated duration is greater than or equal to a second threshold, send a handling request to a vehicle electronic control unit (VECU), wherein the handling request is configured to request the VECU to activate a corresponding handling mechanism for the current gear.

In a fourth aspect, the embodiments of the present application provide a gear disengagement handling mechanism activation apparatus, which comprises: a receiving module, which is configured to receive a handling request sent by a hybrid transmission control unit (HTCU), wherein the handling request is sent by the HTCU when a first accumulated duration is greater than or equal to a second threshold, the first accumulated duration is determined by the HTCU when a rotating speed difference is greater than or equal to a first threshold, and the rotating speed difference is the rotating speed difference between two ends of a synchronizer determined by the HTCU based on a current gear of a vehicle; a judging module, which is configured to determine the current gear of the vehicle, wherein the current gear comprises one of gears under different driving modes; and an activating module, which is configured to activate a handling mechanism corresponding to the current gear.

In a fifth aspect, the embodiments of the present application provide a gear disengagement handling mechanism activation system, which comprises a hybrid transmission control unit (HTCU) and a vehicle electronic control unit (VECU), wherein the HTCU is configured to, when a vehicle completes gear shifting, determine whether the vehicle satisfies a diagnostic condition; when the vehicle satisfies the diagnosis condition, determine a rotating speed difference between two ends of a synchronizer based on a current gear of the vehicle, wherein the current gear comprises one of gears under different driving modes; when the rotating speed difference is greater than or equal to a first threshold, determine that the vehicle is in a gear disengagement state, and determine a first accumulated duration of the gear disengagement state; and when the first accumulated duration is greater than or equal to a second threshold, send a handling request to a vehicle electronic control unit (VECU), wherein the handling request is configured to request the VECU to activate a corresponding handling mechanism for the current gear; and the VECU is configured to receive the handling request sent by the HTCU, wherein the handling request is sent by the HTCU when the first accumulated duration is greater than or equal to a second threshold, the first accumulated duration is determined by the HTCU when the rotating speed difference is greater than or equal to the first threshold, and the rotating speed difference is the rotating speed difference between two ends of the synchronizer determined by the HTCU based on the current gear of the vehicle; determine the current gear of the vehicle, wherein the current gear comprises one of gears under different driving modes; and activate the handling mechanism corresponding to the current gear.

In a sixth aspect, the embodiments of the present application provide a vehicle, which comprises a memory and a controller, wherein the memory stores a computer program executable on the controller, and when the controller executes the program, the steps of the above method are implemented.

In a seventh aspect, the embodiments of the present application further provide a computer-readable storage medium, with a computer program stored thereon, and when the computer program is executed by a processor, the steps of the above method are implemented.

In the embodiments of the present application, when a vehicle completes gear shifting, whether the vehicle satisfies a diagnostic condition is determined in advance; then, a rotating speed difference between two ends of a synchronizer is determined based on a current gear, wherein the current gear comprises one of gears under different driving modes; subsequently, a gear disengagement state of the vehicle and an accumulated duration of the gear disengagement state are determined based on the rotating speed difference; and when the accumulated duration exceeds a threshold, a handling request is sent to a vehicle electronic control unit, so as to cause the vehicle electronic control unit to activate a handling mechanism corresponding to the current gear. As such, on one hand, missed alarms or false alarms of gear disengagement faults of the vehicle are avoided, thereby improving the reliability of gear disengagement diagnosis; on the other hand, when the vehicle is in a gear disengagement state, the vehicle electronic control unit activates the corresponding handling mechanism according to gears under different driving modes through the handling request, thereby increasing the diversity of handling mechanisms, which is beneficial to protecting the shifting mechanism, avoiding safety accidents caused by unexpected vehicle deceleration, and improving driving safety.

It should be understood that the foregoing general description and the following detailed description are merely illustrative and explanatory, and are not intended to limit the technical solutions of the present application.

### Brief Description of the Drawings

In the drawings (which are not necessarily drawn to scale), similar reference numerals can designate like components in different views. Similar reference numerals with different letter suffixes can represent different examples of similar components. The drawings generally illustrate the various embodiments discussed herein by way of example rather than limitation.
Fig. 1 is a structural diagram of a vehicle gear shifting structure in an embodiment of the present application;
Fig. 2 is a flowchart I of a gear disengagement handling mechanism activation method in an embodiment of the present application;
Fig. 3 is a flowchart II of a gear disengagement handling mechanism activation method in an embodiment of the present application;
Fig. 4 is a flowchart III of a gear disengagement handling mechanism activation method in an embodiment of the present application;
Fig. 5 is a schematic diagram of a gear-hold failure handling mechanism in an embodiment of the present application;
Fig. 6 is a first structural diagram of a gear disengagement handling mechanism activation apparatus in an embodiment of the present application;
Fig. 7 is a second structural diagram of a gear disengagement handling mechanism activation apparatus in an embodiment of the present application; and
Fig. 8 is a schematic diagram of a hardware entity of a vehicle according to an embodiment of the present application.

### Detailed Description of the Embodiments

The exemplary embodiments disclosed in the present application will be described in more detail below with reference to the drawings. Although exemplary embodiments of the present application are shown in the drawings, it should be understood that the present application can be implemented in various forms and is not limited to the specific embodiments set forth herein. Rather, these embodiments are provided so that the present application can be more thoroughly understood and so that the scope of the disclosure of the present application can be fully conveyed to those skilled in the art.

In the following description, numerous specific details are set forth in order to provide a more thorough understanding of the present application. However, it will be apparent to those skilled in the art that the present application can be practiced without one or more of these details. In other instances, in order to avoid obscuring the present application, certain well-known technical features are not described; that is, not all features of practical embodiments are described herein, and well-known functions and structures are not described in detail.

It should be understood that, although terms such as first, second, and third can be used herein to describe various elements, components, regions, layers, and/or portions, these elements, components, regions, layers, and/or portions are not limited by these terms. These terms are used only to distinguish one element, component, region, layer, or portion from another. Therefore, without departing from the teachings of the present application, the first element, component, region, layer, or portion described below can be referred to as the second element, component, region, layer, or portion. Likewise, when the second element, component, region, layer, or portion is described, it does not imply that the first element, component, region, layer, or portion must necessarily exist in the present application.

The terminology used herein is for the purpose of describing specific embodiments only and is not intended to be limiting of the present application. As used herein, the singular forms "a", "an", and "the" are intended to include the plural forms as well, unless the context clearly indicates otherwise. It should also be understood that the terms "comprise" and/or "include", when used in this specification, specify the presence of the stated features, integers, steps, operations, elements, and/or components, but do not preclude the presence or addition of one or more other features, integers, steps, operations, elements, components, and/or groups thereof. As used herein, the term "and/or" comprises any and all combinations of the associated listed items.

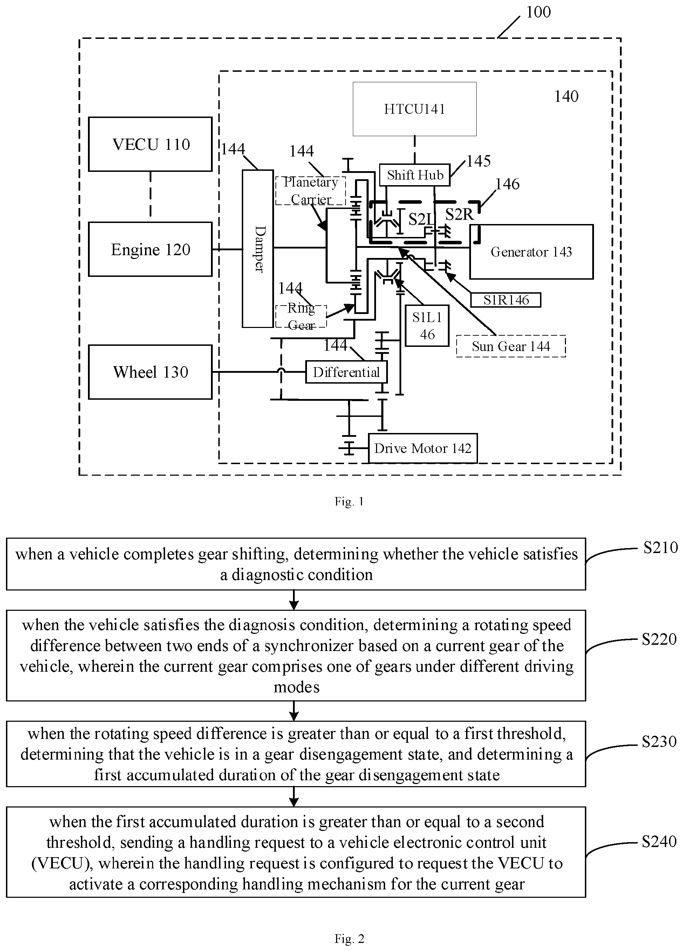

The embodiment of the present application provides a vehicle gear shifting structure 100. As shown in Fig. 1, the vehicle gear shifting structure 100 comprises a vehicle electronic control unit (VECU) 110, which is configured to send a target gear; an engine 120, which is configured to provide power for the vehicle; wheels 130, which are configured to drive vehicle movement; and a hybrid multi-speed transmission 140, which is configured for gear shifting of the vehicle. The hybrid multi-speed transmission 140 comprises a hybrid transmission control unit (HTCU) 141, which is configured to control gear shifting; a drive motor 142, which is configured to drive the vehicle; a generator 143, which is configured to provide power; a gear transmission mechanism 144 (comprising a planetary carrier, a fixed-axis gear, a ring gear, a differential assembly, a sun gear, and bearings, etc.), which is configured to transmit motion and power; a gear shifting actuator 145 (comprising a shift motor, a shift hub, a shift fork, and synchronizers, etc.), which is configured to implement gear shifting operations; and synchronizers 146 (S1L, S1R, S2L, and S2R), which are configured to shorten gear shifting time.

The power transmission routes comprise a series mode, a parallel (direct drive) mode, an electronic continuously variable transmission (ECVT) mode, and an electric vehicle (EV) mode, wherein the ECVT mode comprises an EV operating condition, and the EV mode does not transmit power through the synchronizer and therefore does not require gear disengagement determination.

Series mode: the synchronizer S2L is engaged, the engine is connected to the generator through the synchronizer S2L, and the drive motor is connected to the output shaft through a transmission gear and a differential.

Parallel (direct drive) mode: comprising four gears: (1) Parallel 1 gear: the synchronizers S1R and S2L are engaged, the engine is connected to the output shaft through the synchronizer S1R, the transmission gear and the differential, the generator is connected to the output shaft through the synchronizer S1R, the transmission gear and the differential, the engine is connected to the generator through the synchronizer S2L, and the drive motor is connected to the output shaft through the transmission gear and the differential; (2) Parallel 2 gear: the synchronizers S1R and S2R are engaged, the engine is connected to the output shaft through the synchronizer S1R, the transmission gear, and the differential, and the drive motor is connected to the output shaft through the transmission gear and the differential; (3) Parallel 3 gear: the synchronizers S1L and S2L are engaged, the engine is connected to the output shaft through the synchronizer S1L, the transmission gear, and the differential, the generator is connected to the output shaft through the synchronizer S1L, the transmission gear, and the differential, the engine is connected to the generator through the synchronizer S2L, and the drive motor is connected to the output shaft through the transmission gear and the differential; (4) Parallel 4 gear: the synchronizers S1L and S2R are engaged, the engine is connected to the output shaft through the synchronizer S1L, the transmission gear, and the differential, and the drive motor is connected to the output shaft through the transmission gear and the differential.

ECVT mode: comprising four gears: (1) ECVT1-1 gear or ECVT1-2 gear: the synchronizer S1R is engaged, the engine is connected to the output shaft through the synchronizer S1R, the transmission gear, and the differential, the generator is connected to the output shaft through the synchronizer S1R, the transmission gear, and the differential, the engine is connected to the generator, and the drive motor is connected to the output shaft through the transmission gear and the differential; and (2) ECVT2-2 gear or ECVT2-1 gear: the synchronizer S1L is engaged, the engine is connected to the output shaft through the synchronizer S1L, the transmission gear, and the differential, the generator is connected to the output shaft through the synchronizer S1L, the transmission gear, and the differential, and the drive motor is connected to the output shaft through the transmission gear and the differential.

Currently, complex hybrid multi-speed transmissions exist; however, for the gear disengagement diagnosis in parallel mode, enable conditions are lacking, which easily leads to missed alarms or false alarms, resulting in poor reliability; when the vehicle is diagnosed to be in a gear disengagement state, the handling mechanism maintains the current gear, which provides no protection when the gear position is incorrect. Furthermore, the method for calculating the rotating speed difference is singular and is not suitable for complex hybrid transmissions.

Based on the above-mentioned problems, the embodiments of the present application provide a gear disengagement handling mechanism activation method. On one hand, through determining whether the vehicle satisfies a diagnostic condition in advance, missed alarms or false alarms of gear disengagement can be avoided, thereby improving the reliability of gear disengagement diagnosis; on the other hand, when the vehicle is in a gear disengagement state, the vehicle electronic control unit activates the corresponding handling mechanism according to gears under different driving modes through the handling request, thereby increasing the diversity of handling mechanisms, which is beneficial to protecting the shifting mechanism, avoiding safety accidents caused by unexpected vehicle deceleration, and improving driving safety.

The embodiment of the present application provides a gear disengagement handling mechanism activation method, as shown in Fig. 2, applied to a hybrid transmission control unit (HTCU). The method comprises the following S210 to S240.

S210. When a vehicle completes gear shifting, whether the vehicle satisfies a diagnostic condition is determined.

The vehicle completing gear shifting herein can be understood as the current gear of the vehicle having reached the target gear.

In the embodiment of the present application, the diagnostic condition is configured to determine whether the vehicle meets the requirements for performing gear disengagement diagnosis, when the vehicle satisfies the diagnostic condition, it is further determined whether the vehicle is in a gear disengagement state; and if the vehicle does not satisfy the diagnostic condition, no determination is made.

It should be noted that during the determination of whether the vehicle is in a gear disengagement state, if the vehicle does not satisfy the diagnostic condition, the gear disengagement determination can be stopped.

S220. When the vehicle satisfies the diagnostic condition, a rotating speed difference between two ends of the synchronizer is determined based on the current gear of the vehicle; and the current gear comprises one of the gears under different driving modes.

The different driving modes herein comprise series mode, parallel mode, and ECVT mode.

It should be noted that the gears under different driving modes are implemented in conjunction with different synchronizers. Therefore, the HTCU needs to calculate the rotating speed difference between the two ends of the synchronizer corresponding to the current gear.

S230. When the rotating speed difference is greater than or equal to a first threshold, the vehicle is determined to be in a gear disengagement state; and a first accumulated duration of the gear disengagement state is determined.

In the embodiment of the present application, the first threshold can be specified based on vehicle-level testing, for example, 500 revolutions per minute (rpm).

It should be noted that the rotating speed difference of zero between the two ends of the synchronizer indicates that the current gear of the vehicle is in a normal state. However, in practice, devices may have certain deviations, and the rotating speed difference may not be exactly zero.

S240. When the first accumulated duration is greater than or equal to a second threshold, a handling request is sent to a vehicle electronic control unit (VECU); and the handling request is configured to request the VECU to activate the corresponding handling mechanism for the current gear.

In the embodiment of the present application, the second threshold can be specified based on vehicle-level testing, for example, 2000 ms. The handling mechanism can be understood as a safety mechanism or degraded mode.

In the embodiment of the present application, the first accumulated duration can be calculated using the following formula (1): $t = T * N$ wherein t represents the first accumulated duration, T represents the period for gear disengagement determination, N represents the number of occurrences of the gear disengagement state, *denotes the multiplication sign.

It should be noted that N can be counted in a consecutively increasing manner. For example, if the number of occurrences of a first error position at the current moment is N, then the number of occurrences of the first error position at the next moment is N + 1. In a specific embodiment, within 500 milliseconds (ms), an error occurring every 100 ms is considered consecutively increasing; if the first error occurs at 100 ms and the second error occurs at 300 ms, it is not considered consecutively increasing. If N is not consecutively increasing, N is reset to zero and counting starts over.

In the embodiment of the present application, when the first accumulated duration is greater than or equal to the first threshold, the HTCU can report a fault code and send the handling request to the VECU.

In the embodiment of the present application, on one hand, through determining whether the vehicle satisfies the diagnostic condition in advance, missed alarms or false alarms of gear disengagement faults are avoided, thereby improving the reliability of gear disengagement diagnosis; on the other hand, when the vehicle is in a gear disengagement state, the vehicle electronic control unit activates the corresponding handling mechanism according to gears under different driving modes through the handling request, thereby increasing the diversity of handling mechanisms, which is beneficial to protecting the shifting mechanism, avoiding safety accidents caused by unexpected vehicle deceleration, and improving driving safety.

In some embodiments, the implementation of S220 can comprises the following S221 to S227.

S221. When the current gear is in series mode, the rotating speed difference between two ends of a first synchronizer is calculated.

The first synchronizer can be the S1L as described above.

S222. When the current gear is a first gear in parallel mode, the rotating speed difference between two ends of the first synchronizer and the rotating speed difference between two ends of a second synchronizer are calculated respectively.

The first gear in parallel mode herein can correspond to the Parallel 1 gear; and the second synchronizer can correspond to the S1R as described above.

S223. When the current gear is a second gear in parallel mode, the rotating speed difference between two ends of the second synchronizer and the rotating speed difference between two ends of a third synchronizer are calculated respectively.

The second gear in parallel mode herein can correspond to the Parallel 2 gear; and the third synchronizer can correspond to the S2R as described above.

S224. When the current gear is a third gear in parallel mode, the rotating speed difference between two ends of the first synchronizer and the rotating speed difference between two ends of a fourth synchronizer are calculated respectively.

The third gear in parallel mode herein can correspond to the Parallel 3 gear; and the fourth synchronizer can correspond to the S1L as described above.

S225. When the current gear is a fourth gear in parallel mode, the rotating speed difference between two ends of the third synchronizer and the rotating speed difference between two ends of the fourth synchronizer are calculated respectively.

The fourth gear in parallel mode herein can correspond to the Parallel 4 gear as described above.

S226. When the current gear is a first gear or a second gear in electronic continuously variable transmission (ECVT) mode, the rotating speed difference between two ends of the second synchronizer is calculated.

The first gear in ECVT mode herein can correspond to the ECVT1-1 gear, and the second gear in ECVT mode can correspond to the ECVT1-2 gear as described above.

S227. When the current gear is a third gear or a fourth gear in ECVT mode, the rotating speed difference between two ends of the fourth synchronizer is calculated.

The third gear in ECVT mode herein can correspond to the ECVT2-2 gear, and the fourth gear in ECVT mode can correspond to the ECVT2-1 gear.

In the embodiment of the present application, for different driving modes of a complex hybrid transmission, the rotating speed differences between the two ends of the corresponding synchronizers for the current gear are calculated. In this way, the diversity of calculating the rotating speed differences is increased, making the calculation method applicable to complex hybrid transmissions and further improving the accuracy of gear disengagement determination, thereby enhancing driving safety.

In some embodiments, calculating the rotating speed differences between the two ends of the first synchronizer, the second synchronizer, the third synchronizer, or the fourth synchronizer comprises the following S2201 to S2204.

S2201. A generator rotating speed of the vehicle and an engine rotating speed of the vehicle are obtained.

In the embodiment of the present application, the generator rotating speed and the engine rotating speed can be obtained through sensors, or measured through tachometers, or calculated based on motor supply frequencies. The embodiment of the present application does not impose any specific restrictions on this.

S2202. Based on the generator rotating speed and/or the engine rotating speed, a ring gear rotating speed of the vehicle is determined.

In the embodiment of the present application, the ring gear rotating speed can be calculated by the following formula (2): $Vring = \left[Vengine*\left(1+i1\right)-Vgenerator\right] \div i 1$ wherein Vring represents the ring gear rotating speed, Vengine represents the engine rotating speed, Vgenerator represents the generator rotating speed, and i1 represents the speed ratio between the ring gear rotating speed and the sun gear rotating speed, i1 is predetermined during the hardware design stage, and "÷" represents the division operator.

For the gears under different driving modes, the ring gear rotating speed can be equal to the engine rotating speed.

S2203. A rotating speed at a first end and a rotating speed at a second end corresponding to each synchronizer are determined based on the ring gear rotating speed.

In the embodiment of the present application, the rotating speed at the first end represents the actual rotating speed of the synchronizer and the rotating speed at the second end represents the target rotating speed of the synchronizer; alternatively, the rotating speed at the first end represents the target rotating speed of the synchronizer and the rotating speed at the second end represents the actual rotating speed of the synchronizer.

S2204. A difference between the rotating speed at the first end and the rotating speed at the second end is calculated to obtain the rotating speed difference corresponding to two ends of each synchronizer.

In the embodiments of the present application, each synchronizer refers to the first synchronizer, the second synchronizer, the third synchronizer, or the fourth synchronizer.

It should be noted that the rotating speed difference is taken as the absolute value.

In the embodiment of the present application, the generator rotating speed and/or engine rotating speed is adopted to calculate the ring gear rotating speed; then, based on the ring gear rotating speed, the rotating speed at the first end and the rotating speed at the second end corresponding to each synchronizer are determined; finally, the rotating speed difference between two ends of the synchronizer is obtained. In this way, the diversity of calculating the rotating speed difference is increased, making the calculation method applicable to complex hybrid transmissions and further improving the accuracy of gear disengagement determination, thereby enhancing driving safety.

In some embodiments, the implementation of S2203 can comprises the following S22031 to S22035.

S22031. An output shaft rotating speed of the vehicle and a gear train ratio corresponding to the synchronizer are obtained.

In the embodiment of the present application, during the hardware design stage, the ratio i2 between the drive motor rotating speed and the output shaft rotating speed is preset. The output shaft rotating speed can be calculated based on the drive motor rotating speed and i2. The gear train ratio corresponding to the synchronizer can also be determined during the hardware design stage. For example, the gear train ratio of S1R is i3, and the gear train ratio of S1L is i4.

S22032. When the current gear is in series mode, the generator rotating speed is taken as the rotating speed at the first end of the first synchronizer, and the ring gear rotating speed is taken as the rotating speed at the second end of the first synchronizer.

In the embodiment of the present application, when the current gear is in series mode, the rotating speed at the first end of the first synchronizer is the generator rotating speed, and the rotating speed at the second end is the ring gear rotating speed. For example, when the first synchronizer is S2L, the rotating speed at the first end of S2L is the generator rotating speed, and the rotating speed at the second end of S2L is the ring gear rotating speed, and the ring gear rotating speed refers to the calculation given in Formula (2) above.

S22033. When the current gear is in parallel mode, the ring gear rotating speed is taken as the rotating speed at the first end of the second synchronizer or the fourth synchronizer; and the output shaft rotating speed is multiplied by the gear train ratio corresponding to the synchronizer to obtain the rotating speed at the second end of the second synchronizer or the fourth synchronizer.

In the embodiment of the present application, when the current gear is in parallel mode, the second synchronizer can be S1R, and the fourth synchronizer can be S1L.

It should be noted that, in the first gear of the parallel mode, the rotating speed at the first end of the second synchronizer (for example, S1R) is the ring gear rotating speed, which is equal to the engine rotating speed; and in the second gear of the parallel mode, the rotating speed at the first end of the second synchronizer is the ring gear rotating speed, which is determined according to the above formula (2). In both the first and second gears of the parallel mode, the rotating speed at the second end of the second synchronizer is the output shaft rotating speed multiplied by the gear train ratio corresponding to the synchronizer, for example, the gear train ratio corresponding to the second synchronizer S1R is i3.

In addition, in the third gear of the parallel mode, the rotating speed at the first end of the fourth synchronizer (for example, S1L) is the ring gear rotating speed, which is equal to the engine rotating speed; and in the fourth gear of the parallel mode, the rotating speed at the first end of the fourth synchronizer is the ring gear rotating speed, which is determined according to the above formula (2). In both the third and fourth gears of the parallel mode, the rotating speed at the second end of the fourth synchronizer is the output shaft rotating speed multiplied by the gear train ratio to the synchronizer, for example, the gear train ratio corresponding to the fourth synchronizer S1L is i4.

S22034. When the current gear is in parallel mode, the generator rotating speed is taken as the rotating speed at the first end of the first synchronizer or the third synchronizer; the output shaft rotating speed is multiplied by the gear train ratio corresponding to the synchronizer to obtain the rotating speed at the second end of the first synchronizer; and the rotating speed at the second end of the third synchronizer is 0.

In the embodiment of the present application, when the current gear is in parallel mode, the first synchronizer can be S2L, and the gear train ratio corresponding to S2L is i5, wherein i3, i4, and i5 can be the same or different. The third synchronizer can be S2R.

S22035. When the current gear is in ECVT mode, the ring gear rotating speed is taken as the rotating speed at the first end of the second synchronizer or the fourth synchronizer, and the output shaft rotating speed of the vehicle is multiplied by the gear train ratio corresponding to the synchronizer to obtain the rotating speed at the second end of the second synchronizer or the fourth synchronizer.

The ring gear rotating speed herein can be calculated according to the above formula (2).

In the embodiment of the present application, for the gears under different driving modes, the rotating speeds at two ends of the synchronizers are determined using different calculation methods. In this way, the diversity of calculating the rotating speed difference is increased, improving the accuracy of the rotating speed difference, further enhancing the accuracy of the gear disengagement determination, and thereby improving driving safety.

In some embodiments, the implementation of S210 can comprises the following S211 to S212.

S211. A vehicle speed of the vehicle and an engine torque of the vehicle are obtained.

S212. When the vehicle speed is less than or equal to a third threshold and the engine torque is greater than or equal to a fourth threshold, it is determined that the vehicle satisfies the diagnostic condition; or
when the vehicle speed is less than or equal to the third threshold and the generator rotating speed is greater than or equal to a fifth threshold, it is determined that the vehicle satisfies the diagnostic condition.

In the embodiment of the present application, the third threshold, the fourth threshold, and the fifth threshold can be obtained through calibration. For example, the third threshold can be 1.5 kilometers per hour (km/h), the fourth threshold can be 35 Newton-meters (Nm), and the fifth threshold can be 250 rpm.

In the embodiment of the present application, the vehicle can be diagnosed for a gear disengagement state only after it meets the diagnostic condition.

Exemplarily, when the vehicle speed is less than or equal to 1.5 km/h and the engine torque is greater than or equal to 35 Nm, the vehicle is considered to meet the diagnostic condition; or, when the vehicle speed is less than or equal to 1.5 km/h and the generator rotating speed is greater than or equal to 250 rpm, the vehicle is considered to meet the diagnostic condition.

In another embodiment of the present application, if the vehicle speed is greater than 12 km/h, the vehicle can be considered to meet the diagnostic condition.

It should be noted that during the process of diagnosing whether the vehicle is in a gear disengagement state, if the vehicle does not meet the diagnostic condition, the diagnosis should be exited, i.e., the determination of the gear disengagement state is stopped.

In the embodiment of the present application, the diagnostic condition is set before diagnosing whether the vehicle is in the gear disengagement state. Through using the diagnostic condition, missed faults can be effectively avoided and the occurrence of missed fault conditions can be reduced, thereby improving the reliability of the diagnostic results.

In some embodiments, the method further comprises:
S310. A lighting request is sent to the VECU, and the lighting request is configured to request the VECU to illuminate a motor malfunction lamp and/or a malfunction indicator lamp (MIL).

In the embodiment of the present application, the HTCU sends the lighting request to the VECU. If the VECU receives the lighting request during the first driving cycle, the VECU sends a request to the vehicle instrument cluster to illuminate the malfunction lamp, and the instrument cluster illuminates the motor malfunction lamp; and if the VECU receives the lighting request during two consecutive driving cycles, the VECU sends a request to the instrument cluster to illuminate both the motor malfunction lamp and the MIL, and the instrument cluster illuminates the motor malfunction lamp and the MIL.

The driving cycle can be customized. For a new energy vehicle, the driving cycle can be defined as from the first power-on to the second power-on, or from the first power-on to the first power-off, wherein the first and second refer to two consecutive power-on events.

In the embodiment of the present application, through the lighting request, the user is promptly alerted to a gear disengagement fault in the vehicle, allowing the user to take precautionary measures in advance to ensure safety.

In some embodiments, the method further comprises:
S410. When the vehicle satisfies a first preset condition, the HTCU determines that the vehicle completes gear shifting, wherein
the first preset condition comprises one or more of the following:
   a target gear sent by the VECU is consistent with the current gear;
   a deviation between a target shift hub position corresponding to the target gear and a current shift hub position corresponding to the current gear is less than or equal to a sixth threshold;
   a rotating speed of a shift motor of the vehicle is less than or equal to a seventh threshold;
   the vehicle has no gear shift failure fault;
   self-checking of the HTCU is successful;
   the self-checking of the HTCU is unsuccessful and self-learning is completed; and
   a received driving state signal of the vehicle is valid, and the driving state signal comprises one or more of the following: a vehicle speed signal, an engine rotating speed signal, an engine torque signal, a generator rotating speed signal, and a drive motor rotating speed signal.

After the vehicle is powered on or started, the gear shift states are generally divided into gear shifting in progress, gear shift failure, and gear shift completion. When the shift state indicates shift completion, the vehicle is considered to be in gear.

In the embodiment of the present application, the self-checking is adopted to verify whether the current position of the shift motor obtained by the sensor is consistent with the position of the shift motor stored after the last vehicle power-off.

In the embodiment of the present application, when the vehicle detects that the current position of the shift motor obtained by the sensor is inconsistent with the position of the shift motor stored after the last vehicle power-off, the position of the shift motor is adjusted through self-learning.

In the embodiment of the present application, the driving state signals can be obtained by the HTCU from various sensors.

In the embodiment of the present application, the first preset condition is adopted to determine whether the vehicle completes gear shifting, thereby ensuring the effectiveness of gear disengagement fault determination and avoiding resource waste.

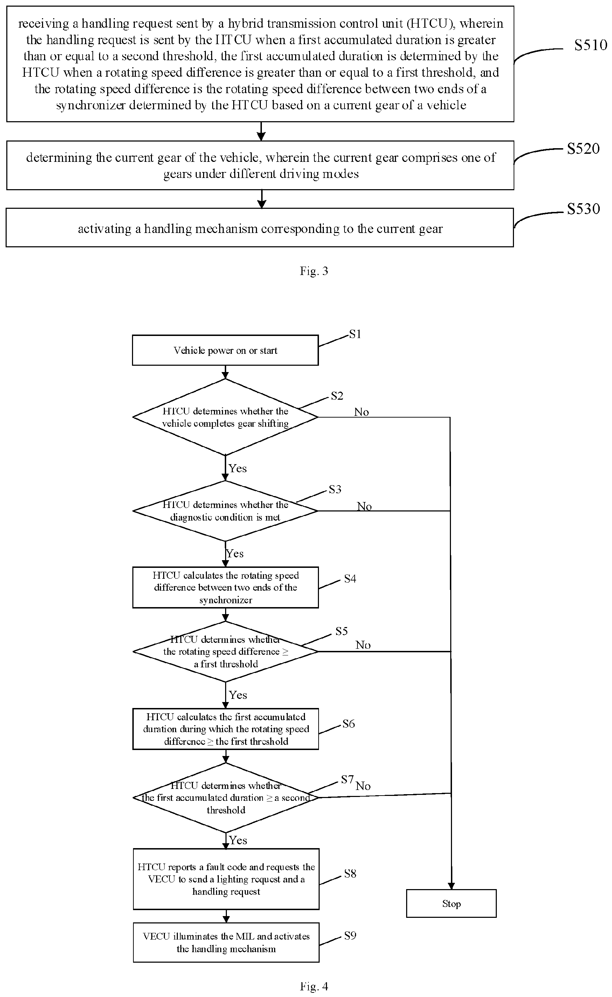

The embodiment of the present application provides a gear disengagement handling mechanism activation method, as shown in Fig. 3, applied to a vehicle electronic control unit (VECU). The method comprises the following S510 to S530.

S510. A handling request sent by a hybrid transmission control unit (HTCU) is received, wherein the handling request is sent by the HTCU when the first accumulated duration is greater than or equal to a second threshold, the first accumulated duration is determined by the HTCU when the rotating speed difference is greater than or equal to the first threshold, and the rotating speed difference is the rotating speed difference between two ends of the synchronizer determined by the HTCU based on the current gear of the vehicle.

S520. The current gear of the vehicle is determined, wherein the current gear comprises one of the gears under different driving modes.

In the embodiment of the present application, the embodiment in which the VECU determines the current gear can comprise: first, the HTCU sends the current gear to the VECU in the form of a signal, and the VECU parses the signal to obtain the current gear.

S530. The handling mechanism corresponding to the current gear is activated.

In the embodiment of the present application, different gears correspond to different handling mechanisms (i.e., degradation modes).

In the embodiment of the present application, after receiving the handling request, the VECU activates the handling mechanism corresponding to the current gear. In this way, when the vehicle is in a gear disengagement state, the handling mechanism is optimized to provide a reliable safety mechanism, protect the shifting mechanism, reduce maintenance costs, and improve driving safety.

In some embodiments, the implementation of S530 can comprises the following S531 to S532.

S530. When a driving mode of the current gear is a series mode or an electronic continuously variable transmission (ECVT) mode, a first handling mechanism is activated, wherein the first handling mechanism is configured to maintain a target gear in the VECU unchanged, maintain the current gear unchanged, and limit a vehicle speed to a first preset vehicle speed.

In the embodiment of the present application, the target gear is the desired gear set by the VECU. During gear shifting, the VECU sends the target gear to the HTCU, and the HTCU switches the current gear to the target gear.

In the embodiment of the present application, both the series mode and the ECVT mode engage only one synchronizer. When the current gear is in the series mode or the ECVT mode, the VECU maintains the target gear unchanged, the HTCU maintains the current gear unchanged, and the VECU limits the vehicle speed to a first preset vehicle speed (for example, 6 km/h).

S532. When the driving mode of the current gear is a parallel mode or a pure electric vehicle mode, a second handling mechanism is activated, wherein the second handling mechanism is configured to switch the current gear to a gear under the ECVT mode, and limit the vehicle speed to a second preset vehicle speed.

In the embodiment of the present application, the second preset vehicle speed can be the same as or different from the first preset vehicle speed.

In the embodiment of the present application, the parallel mode engages two synchronizers. Therefore, when a gear disengagement occurs in parallel mode, one synchronizer needs to be abandoned, and the EVCU switches the current gear to a gear in the ECVT mode, while limiting the vehicle speed to the second preset vehicle speed.

Exemplarily, the specific implementation of the second handling mechanism comprises the following: if the current gear is the parallel first gear (Parallel 1 gear), the VECU switches the target gear to ECVT1-1 gear (i.e., the first gear in the ECVT mode), and the HTCU switches the current gear to ECVT1-1 gear; after the gear shift is completed, the vehicle remains in the current ECVT gear, and the vehicle speed is limited to the second preset vehicle speed; when the current gear is the parallel second gear (Parallel 2 gear) or EV first gear, the VECU switches the target gear to ECVT1-2 gear (i.e., the second gear in the ECVT mode), and the HTCU switches the current gear to ECVT1-2 gear; after the gear shift is completed, the vehicle remains in the current ECVT gear, and the vehicle speed is limited to the second preset vehicle speed; if the current gear is the parallel third gear (Parallel 3 gear), the VECU switches the target gear to ECVT2-1 gear (i.e., the third gear in the ECVT mode), and the HTCU switches the current gear to ECVT2-1 gear; after the gear shift is completed, the vehicle remains in the current ECVT gear, and the vehicle speed is limited to the second preset vehicle speed; and when the current gear is the parallel fourth gear (Parallel 4 gear) or EV second gear, the VECU switches the target gear to ECVT2-2 gear (i.e., the fourth gear in the ECVT mode), and the HTCU switches the current gear to ECVT2-2 gear; after the gear shift is completed, the vehicle remains in the current ECVT gear, and the vehicle speed is limited to the second preset vehicle speed.

In the embodiment of the present application, through providing handling mechanisms corresponding to different driving modes, the reliability of the safety mechanism is improved, the shift mechanism is protected, maintenance costs are reduced, and driving safety is enhanced.

The following provides a detailed description of the gear disengagement handling mechanism activation method according to the embodiment of the present application in combination with specific application scenarios.

The embodiment of the present application relates to another gear disengagement handling mechanism activation method. Through a reliable and practical hybrid multi-speed transmission gear-hold failure diagnosis and a handling mechanism thereof, it is possible to diagnose gear-hold failures under various driving modes while providing a reliable safety mechanism, thereby protecting the shift mechanism, reducing maintenance costs, and improving driving safety.

The following provides a detailed description of another gear disengagement handling mechanism activation method. As shown in Fig. 4, the method comprises the following S1 to S9.

S1. The vehicle is powered on or started.

S2. The HTCU determines whether the vehicle completes gear shifting, if the gear shifting is completed, S3 is executed; otherwise, the process stops.

In the embodiment of the present application, the main conditions for determining that the vehicle completes gear shifting comprise the following: (1) The target gear in the VECU is consistent with the current gear feedback from the HTCU; (2) the deviation between the target shift hub position and the actual shift hub position is less than or equal to Threshold 1 (i.e., the sixth threshold), generally, Threshold 1 is 2°; (3) the rotating speed of the shift motor is less than or equal to Threshold 2 (i.e., the seventh threshold), generally, Threshold 2 is 5 rpm; (4) no gear shift failure fault exists; (5) self-checking is completed successfully or self-learning is completed; and (6) the vehicle speed signal, engine rotating speed signal, engine torque signal, generator rotating speed signal and drive motor rotating speed signal are all valid.

It should be noted that the vehicle is determined to have completed gear shifting only when all six main conditions are satisfied simultaneously.

S3. The HTCU determines whether a diagnostic condition is met, if the condition is met, S4 is executed; otherwise, the process stops.

In the embodiment of the present application, the diagnostic condition can be understood as the enable condition. When the vehicle meets the diagnostic condition, the HTCU automatically enters the diagnosis for the gear disengagement state of the vehicle.

In the embodiment of the present application, the embodiment for determining whether the vehicle meets the diagnostic condition and entering the gear disengagement diagnosis comprise: Embodiment 1: when the vehicle speed is greater than or equal to 12 km/h, the HTCU automatically enters the diagnosis for the gear disengagement state of the vehicle; after entering the diagnosis, if the vehicle speed is less than or equal to 10 km/h, the diagnosis is exited. Embodiment 2: when the vehicle speed is less than or equal to 1.5 km/h and the engine torque is greater than or equal to 35 Nm, the diagnosis is initiated; and after entering the diagnosis, if the vehicle speed is greater than or equal to 1.2 km/h, or if the vehicle speed is less than or equal to 1.2 km/h but the engine torque is less than or equal to 5 Nm, the diagnosis is exited. Embodiment 3: when the vehicle speed is less than or equal to 1.5 km/h and the generator rotating speed is greater than or equal to 250 rpm, the diagnosis is initiated; and after entering the diagnosis, if the vehicle speed is greater than or equal to 1.2 km/h, or if the vehicle speed is less than or equal to 1.2 km/h but the engine torque is less than or equal to 5 Nm, or if the vehicle speed is less than or equal to 1.2 km/h but the generator rotating speed is less than or equal to 50 rpm, the diagnosis is exited.

S4. The HTCU calculates the rotating speed difference between two ends of the synchronizer.

In the embodiment of the present application, the speed ratio of the ring gear to the sun gear is i1 (predetermined in the hardware design stage), the speed ratio of the drive motor to the output shaft is i2 (predetermined in the hardware design stage), the speed ratio of the S1R gear train is i3 (predetermined in the hardware design stage), and the speed ratio of the S1L gear train is i4 (predetermined in the hardware design stage). The calculation method of the rotating speed difference for different gears is as follows:
Series mode: the synchronizer S2L is engaged. The rotating speed difference between two ends of S2L is the absolute value of the difference between the first end rotating speed and the second end rotating speed of S2L. The first end rotating speed of S2L is equal to the generator rotating speed, and the second end rotating speed of S2L is calculated using formula (2) described above.

Parallel 1 gear (i.e., the first gear in parallel mode): the synchronizers S1R and S2L are engaged. 1) The rotating speed difference between two ends of S1R is the absolute value of the difference between the first end rotating speed and the second end rotating speed of S1R, wherein the first end rotating speed of S1R is equal to the engine rotating speed, and the second end rotating speed of S1R is equal to the output shaft rotating speed multiplied by i3. 2) The rotating speed difference between two ends of S2L is the absolute value of the difference between the first end rotating speed and the second end rotating speed of S2L, wherein the first end rotating speed of S2L is equal to the generator rotating speed, and the second end rotating speed of S2L is equal to the output shaft rotating speed multiplied by i3.

Parallel 2 gear (i.e., the second gear in parallel mode): the synchronizers S1R and S2R are engaged. 1) The rotating speed difference between two ends of S1R is the absolute value of the difference between the first end rotating speed and the second end rotating speed of S1R, wherein the first end rotating speed of S1R is calculated using formula (2) described above, and the second end rotating speed of S1R is equal to the output shaft rotating speed multiplied by i3, which is also equal to the drive motor rotating speed multiplied by i3 and divided by i2. 2) The rotating speed difference between two ends of S2R is the absolute value of the difference between the first end rotating speed and the second end rotating speed of S2R, wherein the first end rotating speed of S2R is equal to the generator rotating speed, and the target rotating speed of S2R is 0.

Parallel 3 gear (i.e., the third gear in parallel mode): the synchronizers S1L and S2L are engaged. 1) The rotating speed difference between two ends of S1L is the absolute value of the difference between the first end rotating speed and the second end rotating speed of S1L, wherein the first end rotating speed of S1L is equal to the engine rotating speed, and the second end rotating speed of S1L is equal to the output shaft rotating speed multiplied by i4, which is also equal to the drive motor rotating speed multiplied by i4 and divided by i2. 2) The rotating speed difference between two ends of S2L is the absolute value of the difference between the first end rotating speed and the second end rotating speed of S2L, wherein the first end rotating speed of S2L is equal to the generator rotating speed, and the second end rotating speed of S2L is equal to the output shaft rotating speed multiplied by i4, which is also equal to the drive motor rotating speed multiplied by i4 and divided by i2.

Parallel 4 gear (i.e., the fourth gear in parallel mode): the synchronizers S1L and S2R are engaged. 1) The rotating speed difference between two ends of S1L is the absolute value of the difference between the first end rotating speed and the second end rotating speed of S1L, wherein the first end rotating speed of S1L is calculated using formula (2) described above, and the second end rotating speed of S1L is equal to the output shaft rotating speed multiplied by i4, which is also equal to the drive motor rotating speed multiplied by i4 and divided by i2. 2) The rotating speed difference between two ends of S2R is the absolute value of the difference between the first end rotating speed and the second end rotating speed of S2R, wherein the first end rotating speed of S2R is equal to the generator rotating speed, and the second end rotating speed of S2R is 0.

ECVT 1-1 gear (i.e., the first gear in the ECVT mode) / ECVT 1-2 gear (i.e., the second gear in the ECVT mode): the synchronizer S1R is engaged. The rotating speed difference between two ends of S1R is the absolute value of the difference between the first end rotating speed and the second end rotating speed of S1R, wherein the first end rotating speed of S1R is calculated using formula (2) described above, and the second end rotating speed of S1R is equal to the output shaft rotating speed multiplied by i3, which is also equal to the drive motor rotating speed multiplied by i3 and divided by i2.

ECVT 2-1 gear (i.e., the third gear in the ECVT mode) / ECVT 2-2 gear (i.e., the fourth gear in the ECVT mode): the synchronizer S1L is engaged. The rotating speed difference between two ends of S1L is the absolute value of the difference between the first end rotating speed and the second end rotating speed of S1L, wherein the first end rotating speed of S1L is calculated using formula (2) described above, and the second end rotating speed of S1L is equal to the output shaft rotating speed multiplied by i4, which is also equal to the drive motor rotating speed multiplied by i4 and divided by i2.

S5. The HTCU determines whether the rotating speed difference is greater than or equal to the first threshold; if yes, S6 is executed; otherwise, the process stops.

In the embodiment of the present application: Series mode: if the calculated rotating speed difference between two ends of the synchronizer S2L is greater than or equal to Threshold 3 (i.e., the first threshold); First Gear in Parallel mode: if the calculated rotating speed difference between two ends of the synchronizer S1R or S2L is greater than or equal to the first threshold; Second Gear in Parallel mode: if the calculated rotating speed difference between two ends of the synchronizer S1R or S2R is greater than or equal to the first threshold; Third Gear in Parallel mode: if the calculated rotating speed difference between two ends of the synchronizer S1L or S2L is greater than or equal to the first threshold; Fourth Gear in Parallel mode: if the calculated rotating speed difference between two ends of the synchronizer S1L or S2R is greater than or equal to the first threshold; First Gear or Second Gear in ECVT mode: if the calculated rotating speed difference between two ends of the synchronizer S1R is greater than or equal to the first threshold; Third Gear or Fourth Gear in ECVT mode: if the calculated rotating speed difference between two ends of the synchronizer S1L is greater than or equal to the first threshold; the vehicle is determined to be in a gear disengagement state.

S6. The HTCU calculates the first accumulated duration during which the rotating speed difference is greater than or equal to the first threshold.

In the embodiment of the present application, the first accumulated duration can be calculated using the above Formula (1).

S7. It is determined whether the first accumulated duration is greater than or equal to the second threshold; if yes, S8 is executed; otherwise, the process stops.

In the embodiment of the present application, the first accumulated duration represents the accumulated duration in which the vehicle is in the gear disengagement state. When the first accumulated duration is greater than or equal to the second threshold, it indicates that the vehicle has remained in the gear disengagement state for a duration exceeding the second threshold, i.e., the current gear of the HTCU has failed to hold.

S8. The HTCU reports a fault code and requests the VECU to send a lighting request and a handling request.

In the embodiment of the present application, when the HTCU detects a gear-hold failure in maintaining the current gear, the HTCU reports the fault code and sends the lighting request and handling request to the VECU, thereby alerting the user of the vehicle fault.

S9. The VECU illuminates the malfunction indicator lamp and activates the handling mechanism.

In the embodiment of the present application, upon receiving the lighting request and the handling request, the VECU illuminates the malfunction indicator lamp and activates the handling mechanism corresponding to the current gear.

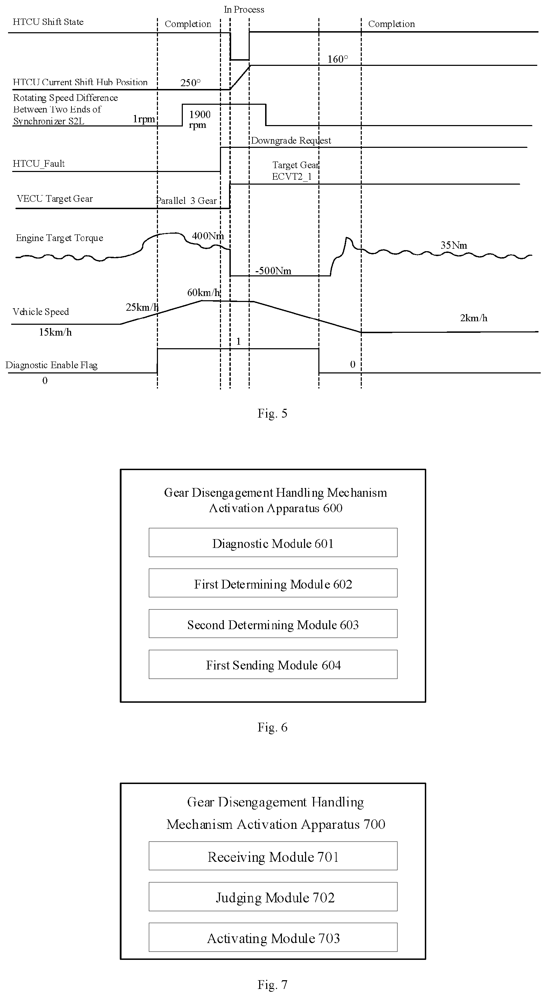

Exemplarily, the embodiment of the present application provides a gear-hold failure handling mechanism, as shown in Fig. 5. When the current gear of the vehicle is the parallel mode third gear (i.e., the third gear in parallel mode), the HTCU shift state indicates completion; the current shift hub angle is 250°; the vehicle speed is greater than or equal to 15 km/h, for example, ranging from 25 km/h to 60 km/h, the corresponding HTCU diagnostic enable flag in Fig. 5 is set to 1, the HTCU then enters diagnosis of the gear disengagement state of the vehicle; the rotating speed difference between two ends of the synchronizer S1L and the synchronizer S2L corresponding to the parallel mode third gear is calculated respectively, when the rotating speed difference between two ends of the synchronizer S2L is 1900 rpm, which is greater than 1 rpm, and persists for a duration of 2000 ms, it indicates that the HTCU experiences a gear-hold failure, and the HTCU issues a downgrade request HTCU_Fault (i.e., the handling mechanism); the VECU switches the target gear from parallel mode third gear to ECVT2-1 gear (i.e., the third gear in the ECVT mode), and the HTCU starts gear shifting, and the HTCU gear shifting state is set to gear shifting in progress, and after the shift hub angle changes from 250° to 160°, the HTCU gear shifting state is switched to gear shift completion; and the engine target torque is limited to around 35 Nm, and the vehicle can only limp at a maximum speed of 2 km/h (i.e., the second preset vehicle speed).

The gear disengagement handling mechanism activation method provided in the embodiment of the present application has the following advantages: from the perspective of hardware protection and functional safety, it provides a gear-hold failure diagnosis and downgrade processing method suitable for different drive modes, comprising series, direct drive/parallel, ECVT, and EV modes; through optimizing the diagnostic condition, it effectively avoids false fault reports and reduces the occurrence of missed fault conditions; from the perspective of failure modes (for example, considering cases where the shift hub position is incorrect), it optimizes the downgrade processing, provides a reliable safety mechanism, protects the shifting mechanism, reduces maintenance costs, and improves driving safety.

The embodiment of the present application further provides a gear disengagement handling mechanism activation apparatus, as shown in Fig. 6. The gear disengagement handling mechanism activation apparatus 600 comprises:
a diagnostic module 601, which is configured to, when a vehicle completes gear shifting, determine whether the vehicle satisfies a diagnostic condition;
a first determining module 602, which is configured to, when the vehicle satisfies the diagnosis condition, determine a rotating speed difference between two ends of a synchronizer based on a current gear of the vehicle, wherein the current gear comprises one of gears under different driving modes;
a second determining module 603, which is configured to, when the rotating speed difference is greater than or equal to a first threshold, determine that the vehicle is in a gear disengagement state, and determine a first accumulated duration of the gear disengagement state; and
a first sending module 604, which is configured to, when the first accumulated duration is greater than or equal to a second threshold, send a handling request to a vehicle electronic control unit (VECU), wherein the handling request is configured to request the VECU to activate the corresponding handling mechanism for the current gear.

In some embodiments, the first determining module 602 comprises a calculating submodule, which is configured to, when the current gear is in series mode, calculate the rotating speed difference between two ends of a first synchronizer; when the current gear is a first gear in parallel mode, calculate the rotating speed difference between two ends of the first synchronizer and the rotating speed difference between two ends of a second synchronizer, respectively; when the current gear is a second gear in parallel mode, calculate the rotating speed difference between two ends of the second synchronizer and the rotating speed difference between two ends of a third synchronizer, respectively; when the current gear is a third gear in parallel mode, calculate the rotating speed difference between two ends of the first synchronizer and the rotating speed difference between two ends of a fourth synchronizer, respectively; when the current gear is a fourth gear in parallel mode, calculate the rotating speed difference between two ends of the third synchronizer and the rotating speed difference between two ends of the fourth synchronizer, respectively; when the current gear is a first gear or a second gear in electronic continuously variable transmission (ECVT) mode, calculate the rotating speed difference between two ends of the second synchronizer; and when the current gear is a third gear or a fourth gear in ECVT mode, calculate the rotating speed difference between two ends of the fourth synchronizer.

In some embodiments, the calculating submodule comprises: a first acquiring unit, which is configured to obtain a generator rotating speed of the vehicle and an engine rotating speed of the vehicle; a first determining unit, which is configured to determine a ring gear rotating speed of the vehicle based on the generator rotating speed and/or the engine rotating speed; a second determining unit, which is configured to determine a rotating speed at a first end and a rotating speed at a second end corresponding to each synchronizer based on the ring gear rotating speed; and a first calculating unit, which is configured to calculate a difference between the rotating speed at the first end and the rotating speed at the second end so as to obtain the rotating speed difference corresponding to two ends of each synchronizer.

In some embodiments, the second determining unit comprises: an acquiring subunit, which is configured to obtain an output shaft rotating speed of the vehicle and a gear train ratio corresponding to the synchronizer; a first determining subunit, which is configured to, when the current gear is in series mode, take the generator rotating speed as the rotating speed at the first end of the first synchronizer, and take the ring gear rotating speed as the rotating speed at the second end of the first synchronizer; a second determining subunit, which is configured to, when the current gear is in parallel mode, take the ring gear rotating speed as the rotating speed at the first end of the second synchronizer or the fourth synchronizer, and multiply the output shaft rotating speed by the gear train ratio corresponding to the synchronizer to obtain the rotating speed at the second end of the second synchronizer or the fourth synchronizer; a third determining subunit, which is configured to, when the current gear is in parallel mode, take the generator rotating speed as the rotating speed at the first end of the first synchronizer or the third synchronizer, and multiply the output shaft rotating speed by the gear train ratio corresponding to the synchronizer to obtain the rotating speed at the second end of the first synchronizer, and the rotating speed at the second end of the third synchronizer is 0; and a fourth determining subunit, which is configured to, when the current gear is in ECVT mode, take the ring gear rotating speed as the rotating speed at the first end of the second synchronizer or the fourth synchronizer, and multiply the output shaft rotating speed of the vehicle by the gear train ratio corresponding to the synchronizer to obtain the rotating speed at the second end of the second synchronizer or the fourth synchronizer.

In some embodiments, the diagnostic module 601 comprises: an acquiring submodule, which is configured to obtain a vehicle speed of the vehicle and an engine torque of the vehicle; and a first determining submodule, which is configured to determine that the vehicle meets the diagnostic condition when the vehicle speed is less than or equal to a third threshold and the engine torque is greater than or equal to a fourth threshold; or, determine that the vehicle satisfies the diagnostic condition when the vehicle speed is less than or equal to the third threshold and the generator rotating speed is greater than or equal to a fifth threshold.

In some embodiments, the gear disengagement handling mechanism activation apparatus 600 further comprises a second sending module, which is configured to send a lighting request to the VECU, wherein the lighting request is configured to request the VECU to illuminate a motor malfunction lamp and/or a malfunction indicator lamp.

In some embodiments, the gear disengagement handling mechanism activation apparatus 600 further comprises a third determining module, which is configured to determine that the vehicle completes gear shifting by the HTCU when the vehicle satisfies a first preset condition; wherein the first preset condition comprises one or more of the following: a target gear sent by the VECU is consistent with the current gear; a deviation between a target shift hub position corresponding to the target gear and a current shift hub position corresponding to the current gear is less than or equal to a sixth threshold; a rotating speed of a shift motor of the vehicle is less than or equal to a seventh threshold; the vehicle has no gear shift failure fault; self-checking of the HTCU is successful; the self-checking of the HTCU is unsuccessful and self-learning is completed; and a received driving state signal of the vehicle is valid, and the driving state signal comprises one or more of the following: a vehicle speed signal, an engine rotating speed signal, an engine torque signal, a generator rotating speed signal, and a drive motor rotating speed signal.

The embodiment of the present application further provides a gear disengagement handling mechanism activation apparatus, as shown in Fig. 7. The gear disengagement handling mechanism activation apparatus 700 comprises:
a receiving module 701, which is configured to receive a handling request sent by a hybrid transmission control unit (HTCU), wherein the handling request is sent by the HTCU when the first accumulated duration is greater than or equal to a second threshold, the first accumulated duration is determined by the HTCU when a rotating speed difference is greater than or equal to a first threshold, and the rotating speed difference is the rotating speed difference between two ends of a synchronizer determined by the HTCU based on a current gear of a vehicle;
a judging module 702, which is configured to determine the current gear of the vehicle, wherein the current gear comprises one of gears under different driving modes; and
an activating module 703, which is configured to activate a handling mechanism corresponding to the current gear.

In some embodiments, the activating module 703 further comprises: a first activating submodule, which is configured to activate a first handling mechanism when a driving mode of the current gear is a series mode or an electronic continuously variable transmission (ECVT) mode, wherein the first handling mechanism is configured to maintain a target gear in the VECU unchanged, maintain the current gear unchanged, and limit a vehicle speed to a first preset vehicle speed; and a second activating submodule, which is configured to activate a second handling mechanism when the driving mode of the current gear is a parallel mode or a pure electric vehicle mode, wherein the second handling mechanism is configured to switch the current gear to a gear under the ECVT mode, and limit the vehicle speed to a second preset vehicle speed.

The description of the gear disengagement handling mechanism activation apparatus embodiments is similar to the description of the gear disengagement handling mechanism activation method embodiments and has similar advantageous effects as the method embodiments. In some embodiments, functions of the gear disengagement handling mechanism activation apparatus or modules comprised in the gear disengagement handling mechanism activation apparatus provided in the embodiments of the present application can be used to perform the methods described in the above gear disengagement handling mechanism activation method embodiments. For technical details not explicitly disclosed in the apparatus embodiments, reference can be made to the descriptions of the gear disengagement handling mechanism activation method embodiments.

The embodiment of the present application provides a gear disengagement handling mechanism activation system, comprising a hybrid transmission control unit (HTCU) and a vehicle electronic control unit (VECU), wherein:
the HTCU is configured to, when a vehicle completes gear shifting, determine whether the vehicle satisfies a diagnostic condition; when the vehicle satisfies the diagnosis condition, determine a rotating speed difference between two ends of a synchronizer based on a current gear of the vehicle, wherein the current gear comprises one of gears under different driving modes; when the rotating speed difference is greater than or equal to a first threshold, determine that the vehicle is in a gear disengagement state, and determine a first accumulated duration of the gear disengagement state; and when the first accumulated duration is greater than or equal to a second threshold, send a handling request to a vehicle electronic control unit (VECU), wherein the handling request is configured to request the VECU to activate a corresponding handling mechanism for the current gear; and
the VECU is configured to receive the handling request sent by the HTCU, wherein the handling request is sent by the HTCU when the first accumulated duration is greater than or equal to a second threshold, the first accumulated duration is determined by the HTCU when the rotating speed difference is greater than or equal to the first threshold, and the rotating speed difference is the rotating speed difference between two ends of the synchronizer determined by the HTCU based on the current gear of the vehicle; determine the current gear of the vehicle, wherein the current gear comprises one of gears under different driving modes; and activate the handling mechanism corresponding to the current gear.

It can be seen that the gear disengagement handling mechanism activation system provided in the embodiment of the present application, when the vehicle completes gear shifting, determines whether the vehicle satisfies a diagnostic condition; determines that a rotating speed difference between two ends of a synchronizer based on a current gear, wherein the current gear comprises one of gears under different driving modes; subsequently, determines that the vehicle is in a gear disengagement state and an accumulated duration of the gear disengagement state based on the rotating speed difference; wherein when the accumulated duration exceeds a threshold, a handling request is sent to a vehicle electronic control unit; and activates a handling mechanism corresponding to the current gear after the vehicle electronic control unit receives the handling request. Accordingly, the system avoids missed or false reporting of the gear disengagement fault of the vehicle, improves the reliability of gear disengagement diagnosis, provides a reliable safety mechanism, helps protect the gear shifting mechanism, prevents safety accidents caused by unexpected vehicle deceleration, and enhances driving safety.

It should be noted that in the present embodiment, if the gear disengagement handling mechanism activation method described above is implemented in the form of software functional modules and sold or used as an independent product, it may also be stored on a computer-readable storage medium. Based on such an understanding, the technical solution in the embodiment of the present application, in essence or regarding the portion contributing to the related technology, can be embodied in the form of a software product. The software product is stored on a storage medium and comprises a plurality of instructions configured to enable a vehicle to execute all or part of the gear disengagement handling mechanism activation method in the embodiments of the present application. The storage medium described above comprises, for example, a USB flash drive, a removable hard disk, a read-only memory (ROM), a magnetic disk, or an optical disk, and other media capable of storing program code. Therefore, the embodiments of the present application are not limited to any specific hardware, software, firmware, or any combination of hardware, software, and firmware.

The embodiment of the present application provides a gear disengagement handling mechanism activation device, comprising a memory and a controller. The memory stores a computer program executable on the controller, and when the controller executes the program, part or all of the steps of the gear disengagement handling mechanism activation method described above are implemented.

The embodiment of the present application further provides a computer-readable storage medium, with a computer program stored thereon, and when the computer program is executed by a controller, part or all of the steps of the gear disengagement handling mechanism activation method described above are implemented. The computer-readable storage medium can be transient or non-transient.

The embodiment of the present application provides a computer program, which comprises computer-readable code, and when the computer-readable code is executed in a vehicle, a controller in the vehicle performs part or all of the steps of the gear disengagement handling mechanism activation method described above.

The embodiment of the present application provides a computer program product, which comprises a non-transient computer-readable storage medium storing a computer program, and when the computer program is read and executed by a computer, part or all of the steps of the above gear disengagement handling mechanism activation method are implemented. The computer program product can be implemented in hardware, software, or a combination of hardware and software. In some embodiments, the computer program product is embodied as a computer storage medium. In other embodiments, the computer program product is embodied as a software product, such as a software development kit (SDK).

It should be noted that the above description of the embodiments focuses on the differences among embodiments, and the similarities or common features among the embodiments may be referred to each other. The descriptions of the device, storage medium, computer program, and computer program product embodiments are similar to the descriptions of the gear disengagement handling mechanism activation method embodiments and have similar beneficial effects. For technical details not disclosed in the embodiments of the device, storage medium, computer program, and computer program product of the present application, reference can be made to the descriptions of the gear disengagement handling mechanism activation method embodiments of the present application.

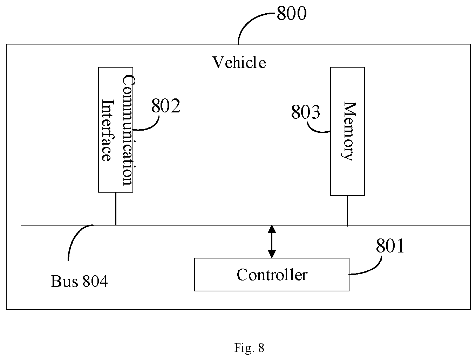

It should be noted that the present application provides a hardware entity of a vehicle, as shown in Fig. 8. The hardware entity of the vehicle 800 comprises a controller 801, a communication interface 802, and a memory 803. The controller 801 generally controls the overall operation of the vehicle 800. The communication interface 802 can enable the gear disengagement handling mechanism activation device to communicate with other terminals or servers through a network. The memory 803 is configured to store instructions and applications executable by the controller 801, and can also cache data to be processed or already processed by the controller 801 and various modules in the vehicle 800 (for example, image data, audio data, voice communication data, and video communication data). The memory 803 can be implemented by a flash memory (FLASH) or a random access memory (RAM). Data transmission among the controller 801, the communication interface 802, and the memory 803 can be carried out through a bus 804.

It should be understood that reference throughout the specification to "one embodiment" or "an embodiment" means that particular features, structures, or characteristics related to the embodiment are comprised in at least one embodiment of the present application. Therefore, the phrases "in an embodiment" or "in one embodiment" appearing throughout the specification do not necessarily refer to the same embodiment. Furthermore, these particular features, structures, or characteristics can be combined in any suitable manner in one or more embodiments. It should be understood that, in the various embodiments of the present application, the numerical order of the above steps or processes does not imply any sequence of execution. The execution order of the steps or processes should be determined based on their functions and internal logic, and should not impose any limitation on the implementation of the embodiments of the present application. The above serial numbers in the embodiments of the present application are only for description, and do not represent the advantages or disadvantages of the embodiments.

It should be noted that the terms "include", "comprise" or any other variants thereof are intended to cover non-exclusive inclusion, so that a process, method, article or apparatus comprising a series of elements not only comprises those elements, but also other elements not explicitly listed, or elements inherent to such process, method, article or apparatus. If there are no more restrictions, the elements defined by the phrase "comprising a..." do not exclude the existence of other identical elements in the process, method, article, or apparatus comprising the elements.

In the several embodiments provided in the present application, it should be understood that the disclosed devices and methods can be implemented in other manners. The device embodiments described above are merely exemplary. For example, the division of units is only a logical functional division. In actual implementation, other division approaches can be adopted, such as: a plurality of units or components can be combined, or integrated into another system, or some features can be omitted or not executed. In addition, the couplings, or direct couplings, or communication connections between the components shown or discussed can be indirect couplings or communication connections through certain interfaces, devices, or units, and can be electrical, mechanical, or in other forms.

The units described as separate components may or may not be physically separated, and the components shown as units may or may not be physical units; they may be located in one place or distributed across multiple network units, and some or all of the units may be selected according to actual requirements to achieve the objectives of the solution of the present embodiment.

In addition, all functional units in each embodiment of the present application can be fully integrated into a single processing unit, or each unit can be individually provided as a separate unit, or two or more units can be integrated into a single unit; the integrated units can be implemented in hardware, or in a combination of hardware and software functional units.

Those skilled in the art can understand that all or part of the steps of the above method embodiments can be implemented by hardware related to program instructions, the aforementioned program can be stored in a computer-readable storage medium, and when executed, the program executes the steps of the above method embodiments; and the aforementioned storage medium comprises various media capable of storing program codes, such as a mobile storage device, a read-only memory (ROM), a magnetic disk, or an optical disk.

Alternatively, if the integrated units of the present application are implemented as software functional modules and sold or used as independent products, they can also be stored in a computer-readable storage medium. Based on such an understanding, the technical solution in the present application or the part that contributes to the related art can be embodied in the form of a software product. The computer software product is stored on a storage medium and comprises a plurality of instructions configured to enable a vehicle to execute all or part of the method in the embodiments of the present application. The storage medium comprises various media capable of storing program codes, such as a mobile storage device, a ROM, a magnetic disk, or an optical disk.

The above descriptions are merely illustrative of the embodiments of the present application, and the protection scope of the present application is not limited thereto. Any variations or substitutions readily apparent to those skilled in the art within the technical scope disclosed in the present application shall fall within the protection scope of the present application.

## Claims

1. A gear disengagement handling mechanism activation method, applied to a hybrid transmission control unit HTCU, and comprising:
when a vehicle completes gear shifting, determining whether the vehicle satisfies a diagnostic condition;
when the vehicle satisfies the diagnosis condition, determining a rotating speed difference between two ends of a synchronizer based on a current gear of the vehicle, wherein the current gear comprises one of gears under different driving modes;
when the rotating speed difference is greater than or equal to a first threshold, determining that the vehicle is in a gear disengagement state, and determining a first accumulated duration of the gear disengagement state; and
when the first accumulated duration is greater than or equal to a second threshold, sending a handling request to a vehicle electronic control unit VECU, wherein the handling request is configured to request the VECU to activate a corresponding handling mechanism for the current gear.

2. The method according to claim 1, wherein the step of determining the rotating speed difference between two ends of the synchronizer based on the current gear of the vehicle comprises:
when the current gear is in series mode, calculating the rotating speed difference between two ends of a first synchronizer;
when the current gear is a first gear in parallel mode, calculating the rotating speed difference between two ends of the first synchronizer and the rotating speed difference between two ends of a second synchronizer, respectively;
when the current gear is a second gear in parallel mode, calculating the rotating speed difference between two ends of the second synchronizer and the rotating speed difference between two ends of a third synchronizer, respectively;
when the current gear is a third gear in parallel mode, calculating the rotating speed difference between two ends of the first synchronizer and the rotating speed difference between two ends of a fourth synchronizer, respectively;
when the current gear is a fourth gear in parallel mode, calculating the rotating speed difference between two ends of the third synchronizer and the rotating speed difference between two ends of the fourth synchronizer, respectively;
when the current gear is a first gear or a second gear in electronic continuously variable transmission ECVT mode, calculating the rotating speed difference between two ends of the second synchronizer; and
when the current gear is a third gear or a fourth gear in ECVT mode, calculating the rotating speed difference between two ends of the fourth synchronizer.

3. The method according to claim 2, wherein the step of determining the rotating speed difference between two ends of the first synchronizer, the second synchronizer, the third synchronizer, or the fourth synchronizer comprises:
obtaining a generator rotating speed of the vehicle and an engine rotating speed of the vehicle;
determining a ring gear rotating speed of the vehicle based on the generator rotating speed and/or the engine rotating speed;
determining a rotating speed at a first end and a rotating speed at a second end corresponding to each synchronizer based on the ring gear rotating speed; and
calculating a difference between the rotating speed at the first end and the rotating speed at the second end to obtain the rotating speed difference corresponding to each synchronizer.

4. The method according to claim 3, wherein the step of determining the rotating speed at the first end and the rotating speed at the second end corresponding to each synchronizer based on the ring gear rotating speed comprises:
obtaining an output shaft rotating speed of the vehicle and a gear train ratio corresponding to the synchronizer;
when the current gear is in series mode, taking the generator rotating speed as the rotating speed at the first end of the first synchronizer, and taking the ring gear rotating speed as the rotating speed at the second end of the first synchronizer;
when the current gear is in parallel mode, taking the ring gear rotating speed as the rotating speed at the first end of the second synchronizer or the fourth synchronizer, and multiplying the output shaft rotating speed by the gear train ratio corresponding to the synchronizer to obtain the rotating speed at the second end of the second synchronizer or the fourth synchronizer;
when the current gear is in parallel mode, taking the generator rotating speed as the rotating speed at the first end of the first synchronizer or the third synchronizer, and multiplying the output shaft rotating speed by the gear train ratio corresponding to the synchronizer to obtain the rotating speed at the second end of the first synchronizer, wherein the rotating speed at the second end of the third synchronizer is 0; and
when the current gear is in ECVT mode, taking the ring gear rotating speed as the rotating speed at the first end of the second synchronizer or the fourth synchronizer, and multiplying the output shaft rotating speed of the vehicle by the gear train ratio corresponding to the synchronizer to obtain the rotating speed at the second end of the second synchronizer or the fourth synchronizer.

5. The method according to claim 4, wherein the step of determining whether the vehicle satisfies the diagnostic condition comprises:
obtaining a vehicle speed of the vehicle and an engine torque of the vehicle;
when the vehicle speed is less than or equal to a third threshold and the engine torque is greater than or equal to a fourth threshold, determining that the vehicle satisfies the diagnostic condition; or
when the vehicle speed is less than or equal to the third threshold and the generator rotating speed is greater than or equal to a fifth threshold, determining that the vehicle satisfies the diagnostic condition.

6. The method according to any one of claims 1 to 5, wherein the method further comprises:
sending a lighting request to the VECU, wherein the lighting request is configured to request the VECU to illuminate a motor malfunction lamp and/or a malfunction indicator lamp.

7. The method according to any one of claims 1 to 4, wherein the method further comprises:
when the vehicle satisfies a first preset condition, the HTCU determines that the vehicle completes gear shifting, wherein
the first preset condition comprises one or more of the following:
a target gear sent by the VECU is consistent with the current gear;
a deviation between a target shift hub position corresponding to the target gear and a current shift hub position corresponding to the current gear is less than or equal to a sixth threshold;
a rotating speed of a shift motor of the vehicle is less than or equal to a seventh threshold;
the vehicle has no gear shift failure fault;
self-checking of the HTCU is successful;
the self-checking of the HTCU is unsuccessful and self-learning is completed; and
a received driving state signal of the vehicle is valid, and the driving state signal comprises one or more of the following: a vehicle speed signal, an engine rotating speed signal, an engine torque signal, a generator rotating speed signal, and a drive motor rotating speed signal.

8. A gear disengagement handling mechanism activation method, applied to a vehicle electronic control unit VECU, and comprising:
receiving a handling request sent by a hybrid transmission control unit HTCU, wherein the handling request is sent by the HTCU when a first accumulated duration is greater than or equal to a second threshold, the first accumulated duration is determined by the HTCU when a rotating speed difference is greater than or equal to a first threshold, and the rotating speed difference is the rotating speed difference between two ends of a synchronizer determined by the HTCU based on a current gear of a vehicle;
determining the current gear of the vehicle, wherein the current gear comprises one of gears under different driving modes; and
activating a handling mechanism corresponding to the current gear.

9. The method according to claim 8, wherein the step of activating the handling mechanism corresponding to the current gear comprises:
when a driving mode of the current gear is a series mode or an electronic continuously variable transmission ECVT mode, activating a first handling mechanism, wherein the first handling mechanism is configured to maintain a target gear in the VECU unchanged, maintain the current gear unchanged, and limit a vehicle speed to a first preset vehicle speed; and
when the driving mode of the current gear is a parallel mode or a pure electric vehicle mode, activating a second handling mechanism, wherein the second handling mechanism is configured to switch the current gear to a gear under the ECVT mode, and limit the vehicle speed to a second preset vehicle speed.

10. A gear disengagement handling mechanism activation apparatus, comprising:
a diagnostic module, which is configured to, when a vehicle completes gear shifting, determine whether the vehicle satisfies a diagnostic condition;
a first determining module, which is configured to, when the vehicle satisfies the diagnosis condition, determine a rotating speed difference between two ends of a synchronizer based on a current gear of the vehicle, wherein the current gear comprises one of gears under different driving modes;
a second determining module, which is configured to, when the rotating speed difference is greater than or equal to a first threshold, determine that the vehicle is in a gear disengagement state, and determine a first accumulated duration of the gear disengagement state; and
a first sending module, which is configured to, when the first accumulated duration is greater than or equal to a second threshold, send a handling request to a vehicle electronic control unit VECU, wherein the handling request is configured to request the VECU to activate a corresponding handling mechanism for the current gear.

11. A gear disengagement handling mechanism activation apparatus, comprising:
a receiving module, which is configured to receive a handling request sent by a hybrid transmission control unit HTCU, wherein the handling request is sent by the HTCU when a first accumulated duration is greater than or equal to a second threshold, the first accumulated duration is determined by the HTCU when a rotating speed difference is greater than or equal to a first threshold, and the rotating speed difference is the rotating speed difference between two ends of a synchronizer determined by the HTCU based on a current gear of a vehicle;
a judging module, which is configured to determine the current gear of the vehicle, wherein the current gear comprises one of gears under different driving modes; and
an activating module, which is configured to activate a handling mechanism corresponding to the current gear.

12. A gear disengagement handling mechanism activation system, comprising a hybrid transmission control unit HTCU and a vehicle electronic control unit VECU, wherein:
the HTCU is configured to, when a vehicle completes gear shifting, determine whether the vehicle satisfies a diagnostic condition; when the vehicle satisfies the diagnosis condition, determine a rotating speed difference between two ends of a synchronizer based on a current gear of the vehicle, wherein the current gear comprises one of gears under different driving modes; when the rotating speed difference is greater than or equal to a first threshold, determine that the vehicle is in a gear disengagement state, and determine a first accumulated duration of the gear disengagement state; and when the first accumulated duration is greater than or equal to a second threshold, send a handling request to a vehicle electronic control unit VECU, wherein the handling request is configured to request the VECU to activate a corresponding handling mechanism for the current gear; and
the VECU is configured to receive the handling request sent by the HTCU, wherein the handling request is sent by the HTCU when the first accumulated duration is greater than or equal to a second threshold, the first accumulated duration is determined by the HTCU when the rotating speed difference is greater than or equal to the first threshold, and the rotating speed difference is the rotating speed difference between two ends of the synchronizer determined by the HTCU based on the current gear of the vehicle; determine the current gear of the vehicle, wherein the current gear comprises one of gears under different driving modes; and activate the handling mechanism corresponding to the current gear.

13. A vehicle, comprising a memory and a controller, wherein the memory stores a computer program executable on the controller, and when the controller executes the program, the steps of the method according to any one of claims 1 to 7 or claims 8 to 9 are implemented.

14. A computer-readable storage medium, with a computer program stored thereon, wherein when the computer program is executed by a processor, the steps of the method according to any one of claims 1 to 7 or claims 8 to 9 are implemented.
